(19) Europäisches Patentamt
European Patent Office
Office européen des brevets

(11) Numéro de publication: **0 038 737**
**B1**

(12) **FASCICULE DE BREVET EUROPEEN**

(45) Date de publication du fascicule du brevet: **18.07.84**

(51) Int. Cl.³: **C 09 B 67/18**, C 09 D 11/00, D 06 P 1/44

(21) Numéro de dépôt: **81400554.2**

(22) Date de dépôt: **07.04.81**

(54) **Pigments de phtalocyanine de cuivre, leur procédé de préparation et leur application.**

(30) Priorité: **18.04.80 FR 8008722**

(43) Date de publication de la demande:
**28.10.81 Bulletin 81/43**

(45) Mention de la délivrance du brevet:
**18.07.84 Bulletin 84/29**

(84) Etats contractants désignés:
**BE CH DE FR GB IT LI NL**

(56) Documents cités:
**DE - C - 930 648**
**FR - A - 1 428 172**
**FR - A - 1 538 270**
**FR - E - 90 862**
**GB - A - 1 234 067**
**GB - A - 1 299 439**
**US - A - 2 699 442**

**Le dossier contient des informations techniques présentées postérieurement au dépôt de la demande et ne figurant pas dans le présent fascicule.**

(73) Titulaire: **I.C.I. FRANCOLOR S.A.**
**8 Avenue Reaumur Boîte Postale 207**
**F-92142 Clamart Cedex (FR)**

(72) Inventeur: **Pigasse, Daniel**
**154, rue Louis Blanc**
**F-76000 Rouen (FR)**

(74) Mandataire: **Pugsley, Roger Graham**
**IMPERIAL CHEMICAL INDUSTRIES PLC Legal Department: Patents PO Box 6**
**Welwyn Garden City Herts, AL7 1HD (GB)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**EP 0 038 737 B1**

## Description

La présente invention concerne des pigments de phtalocyanine de cuivre, leur procédé de fabrication et leur application.

La phtalocyanine de cuivre, telle qu'elle est obtenue à l'issue de la synthese, est généralement constituée de grosses particules bien cristallisées, dont la taille est largement supérieure au micron, et ne présente pas de pouvoir pigmentaire, c'est-à-dire n'est pas susceptible d'être utilisée pour colorer par exemple une encre, une peinture ou une matière plastique.

Pour avoir un pouvoir colorant satisfaisant, le pigment de phtalocyanine de cuivre doit présenter une taille particulaire largement inférieure au micron, généralement comprise entre 0,02 et 0,5 micron ($\mu$m).

Un des moyens de réduire la taille particulaire est le broyage de la phtalocyanine de cuivre en présence de substrat minéral en grande quantité; ainsi, dans le procédé décrit dans le brevet américain 3 030 370, on broie 1 partie de phtalocyanine de cuivre en présence de 4 à 10 parties de sulfate d'alumine avec une faible quantité (0,1 à 0,4 partie) de solvant cristallisant pour assurer la conversion vers la forme $\beta$ (nuance verdâtre). Après broyage, le mélange est traité à chaud en milieu acide dilué pour éliminer le substrat minéral.

Une autre méthode de conditionnement de la phtalocyanine de cuivre est le broyage sans substrat minéral. Dans ce cas, décrit, par exemple dans le brevet américain 2 857 400, on broie dans un premier temps la phtalocyanine de cuivre sans substrat minéral, ce qui a pour résultat l'obtention d'un produit broyé sand valeur pigmentaire car fortement aggloméré dans un deuxième temps, on traite la phtalocyanine de cuivre broyée dans un solvant en grande quantité (au moins 4 parties de solvant pour 1 partie de phtalocyanine de cuivre) sous agitation violente pour désagglomérer la phtalocyanine de cuivre broyée.

Ce deuxième procédé est moins polluant que le premier puisqu'il ne comporte pas l'élimination d'une grande quantité de charge minérale; de plus, la phase de broyage, est plus performante puisque la charge dans le broyeur est constituée de phtalocyanine de cuivre seulement. Cependant, ce procédé a l'inconvénient de nécessiter de grandes quantités de solvants.

Le brevet anglais 1 234 067, décrit un procédé pour la préparation d'un pigment de phtalocyanine de cuivre, qui est pour l'essentiel en forme beta, par le broyage d'une phtalocyanine de cuivre "crude", c'est-à-dire une phtalocyanine de cuivre directement issue de la synthèse, dans un milieu aqueux avec un éther alkyle qui contiens au moins un élément d'éthyleneglycol, et un amine qui contiens une chaîne alkyle ayant au moins 12 atomes de carbone.

Il a maintenant été trouvé des pigments de phtalocyanine de cuivre de grande valeur qui sont préparés par un moyen économique, sans broyage avec une grande quantité de sel ni traitement avec une grande quantité de solvant.

L'invention a pour objet des pigments de phtalocyanine de cuivre caractérisés en ce qu'ils ont une surface spécifique comprise entre 15 et 65 $m^2/g$ (déterminée par la methode BET), une teneur en forme beta comprise entre 3 et 85% (déterminée par analyse des rayons X) et qu'ils contiennent jusqu'a 10% d'une amine grasse ou d'un mélange d'amines grasses de formule (I):

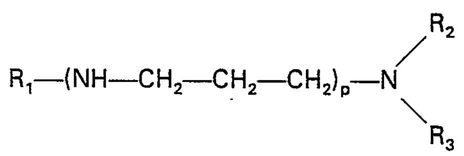

(I)

dans laquelle $R_1$ désigne un chaîne hydrocarbonée aliphatique ou alicyclique en $C_1$ a $C_{22}$ non aromatique, $R_2$ désigne l'hydrogène ou une chaîne hydrocarbonée aliphatique ou alicyclique en $C_1$ à $C_{22}$ non aromatique, la somme des atomes de carbone des chaînes $R_1$ et $R_2$ est comprise entre 6 et 50, $R_3$ désigne l'hydrogène ou un radical aliphatique en $C_1$ à $C_4$, p peut varier de 0 à 20 et de préférence de 0 à 4.

Les mélanges d'amines à radical $R_1$ ou $R_2$ aliphatique peuvent être des mélanges industriels tels que ceux vendus sous le nom de NORAM, DINORAM, TRINORAM, POLYNORAM par le Département Prochinor de Pierrefitte Auby.

A titre d'exemple d'amine à radical alicyclique on peut citer un dérivé aminé de la colophane tel que la rosin amine de Hercules.

La teneur en halogène, principalement chlore ou brome, des pigments de phtalocyanine de cuivre varie de 0 à 5%.

Les pigments selon l'invention contiennent éventuellement 1 à 10% par rapport à la phtalocyanine de cuivre pure, et de préférence de 2 à 5%, d'un ou plusieurs composés non volatils comportant une chaîne hydrocarbonée de 6 à 22 atomes de carbone et une ou plusieurs fonctions polaires par exemple du type acide, alcool, ester, amide, cétone, éther-oxyde. Parmi ces composés on peut citer l'acide oléïque, l'acide stéarique, l'alcool laurique, l'alcool cétylique, l'oléate ou stéarate de

glycérol. Dans ce cas, la teneur globale en amine plus composé non volatil ne doit pas dépasser 12% par rapport à la phtalocyanine pure.

Dans le cadre de l'invention, il est possible d'incorporer aux pigments une faible quantité de tout dérivé de phtalocyanine de cuivre, bien connu de l'homme de l'art pour modifier les propriétés de stabilité à la cristallisation en présence de solvants ou de stabilité à la floculation.

Pour obtenir des pigments de phtalocyanine de cuivre selon l'invention, on introduit l'amine grasse de formule (I) avant ou au cours du broyage, sans substrat minéral, de la phtalocyanine de cuivre brute.

La phtalocyanine de cuivre brute à broyer peut être directement issue de la synthèse, par exemple à partir d'anhydride phtalique ou de phtalodinitrile et contenir des impuretés résultant de la synthèse. Au cas où ces impuretés sont gênantes pour l'utilisation normale du pigment, celles-ci sont éliminées par un traitement, connu de l'homme de l'art, subséquent au broyage, qui consiste par exemple à traiter la phtalocyanine de cuivre par un acide dilué à chaud.

Le broyage est éventuellement réalisé en présence d'amine comme défini ci-dessus et d'un ou plusieurs solvants caractérisés par leur miscibilité à l'eau qui doit être d'au moins 3% par rapport à l'eau à une température quelconque comprise entre la température ordinaire et 100°C. A titre d'exemple non limitatif, on peut citer le méthanol, l'éthanol, le propanol, l'isopropanol, le butanol, l'isobutanol, la pyridine, le diméthylformamide, le diméthyl sulfoxyde.

La teneur en solvant est comprise entre 1 et 10% par rapport à la phtalocyanine de cuivre pure, mais de préférence de 2 à 5%; la teneur globale en amine plus solvant ne devant pas dépasser 15%.

Le broyage peut aussi être réalisé en présence d'amine et d'un ou plusieurs composés non volatils comportant une chaîne hydrocarbonée de 6 à 22 atomes de carbone et une ou plusieurs fonctions polaires par exemple du type acide, alcool, ester, amide, cétone, éther-oxyde.

La teneur en composé non volatil est comprise entre 1 et 10% par rapport à la phtalocyanine de cuivre pure, mais de préférence de 2 à 5%; la teneur globale en amine plus composé non volatil ne devant pas dépasser 12%.

On peut, selon l'invention, réaliser le broyage en présence d'amine et simultanément de solvant et de composé non volatil. Dans ce cas, la teneur totale en amine plus solvant plus composé non volatil ne doit pas dépasser 15% par rapport à la phtalocyanine de cuivre pure.

Le broyage est effectué dans tout appareil pouvant réaliser un broyage à sec ou humide; on citera à titre d'exemple le broyeur à barres, le broyeur vibrant, le broyeur à boulets.

Dans le cas d'un broyage à sec, la masse de broyage a l'aspect d'une poudre qui s'écoule facilement et qui n'adhère pas aux parois du broyeur ou aux éléments de broyage, ce qui est intéressant d'un point de vue pratique.

La durée du broyage dépend du type de broyeur, de la charge de l'appareil et varie de 2 à 60 heures selon ces deux paramètres. En pratique, pour un appareil de broyage donné, on étudie l'influence de la durée du broyage sur le rendement coloristique du pigment final et on retient une durée de broyage qui réalise un bon compromis entre l'énergie à dépenser pour broyer et le rendement coloristique du pigment final qui tend à augmenter avec la durée du broyage.

Selon une autre modalité de l'invention, l'amine grasse de formule (I) et éventuellement le composé non volatil sont incorporés à la phtalocyanine durant le traitement aqueux destiné à purifier la phtalocyanine de cuivre et postérieur au broyage.

Ce qui est nouveau et surprenant dans l'invention, c'est la possibilité d'obtenir des pigments de phtalocyanine de cuivre ayant à la fois une surface spécifique relativement grande et une teneur en forme $\alpha$ relativement élevée.

En effet, d'une part il est connu que le broyage de la phtalocyanine de cuivre, sans substrat minéral, conduit à des pigments fortement agglomérés de surface spécifique voisine de 10 $m^2/g$ ou moins et de teneur en forme $\alpha$ variable selon les modalités du broyage.

D'autre part, il est connu que les solvants cristallisants introduits durant le broyage permettent la conversion de la phtalocyanine de cuivre de la forme $\alpha$ vers la forme $\beta$.

L'intérêt d'une phtalocyanine de cuivre peu agglomérée, à surface spécifique suffisante, est évident car l'énergie à fournir pour obtenir en application la force colorante sera moindre dans le cas d'une phtalocyanine de cuivre peu agglomérée.

L'intérêt d'utiliser en application une phtalocyanine de cuivre contenant un pourcentage relativement important de forme $\alpha$ résulte des propriétés en application des pigments obtenus selon l'invention. Il est surprenant de constater que ces pigments destinés aux utilisations habituelles des pigments telles que coloration des encres, des peintures, des matières plastiques, des textiles et des cuirs, présentent des propriétés coloristiques particulièrement remarquables dans certaines applications notamment en encre liquide pour l'édition ou le conditionnement, en peinture à solvant; dans ces applications, le rendement coloristique est généralement supérieur de 10 à 20% par rapport aux pigments classiques commercialisés sans qu'il soit possible pour l'instant de formuler une hypothèse, de trouver une explication à ces gains de rendement coloristique.

Les pigments selon l'invention sont également destinés à l'enduction de substrats divers.

L'intérêt économique de l'invention est également important; en effet, les procédés permettant d'obtenir des produits selon l'invention ne comportent ni broyage avec substrat minéral, ce qui réduit

les coûts de matière et évite la pollution saline, ni traitement avec de grandes quantités de solvant ce qui réduit aussi les coûts de matière et de fabrication.

Les exemples suivants, dans lesquels les parties indiquées sont en poids sauf mention contraire, illustrent l'invention sals la limiter.

Exemple 1

Dans un broyeur à barres de laboratoire, on broie pendant 24 heures, 140 parties de phtalocyanine de cuivre directement issue de la synthèse; on introduit alors 5 parties de NORAM C qui est un mélange d'amines de poids moléculaire moyen 220 comprenant 3% de caprylylamine, 6% de caprylamine, 56% de laurylamine, 18% de myristylamine, 10% de palmitylamine, 2% de stéarylamine et 5% d'oleylamine; et on poursuit le broyage pendant 6 heures. On décharge la broyeur sans difficulté, le produit, sous forme de poudre, ne collant pas aux parois.

Dans un essai, témoin, le broyage est poursuivi pendant 30 heures sans introduction d'amine.

On élimine les impuretés contenues dans la phtalocyanine en la traitant par 1000 parties d'eau et 200 parties d'acide chlorhydrique concentré, pendant 2 heures à 90°C.

On recueille après séchage 110 parties de pigment de phtalocyanine de cuivre dans le cas de l'essai et 106 parties de pigment dans le cas de l'essai témoin.

En vue de l'application en encre toluénique, on incorpore à chaque pigment, 5 parties d'un dérivé de la phtalocyanine de cuivre de formule Pc cu $-[CH_2-N(CH_3)_2]_3$.

Propriétés physiques des pigments:

| | % de forme $\beta$ | Surface spécifique |
|---|---|---|
| Témoin | 25% | 11 $m^2/g$ |
| Essai Exemple 1 | 32% | 25 $m^2/g$ |

Préparation de l'encre toluénique:

On disperse à l'Attritor chaque pigment pendant 45 mn à 400 tr/mn avec 1700 parties de billes d'acier de 3,8 mm de diamètre pour 45 parties de pigment et 255 parties de vernis contenant 60% de toluène et 40% de résine Shébélio 68139 (fabricant Sheby).

*Application:*

—L'encre est diluée à 4,5—5—5,5% en pigment en ajustant la viscosité autour de 15 S à la coupe AFNOR n° 4 par variation du rapport vernis Shébélio 68139/Toluène.

—Impression sur machine hélio Winstone à la vitesse de 40 m/mn.

—Mesure de la densité optique à l'aide du densitomètre MAC BETH avec un écran rouge.

*Résultats*

| | Essai témoin | Essai Exemple 1 |
|---|---|---|
| Densité optique Concentration: 4,5% | 1.67 | 1,78 |
| 5% | 1,77 | 1,86 |
| 5,5% | 1,83 | 1,93 |
| Vivacité | type | supérieure |
| Nuance | type | voisine |

Ainsi, on observe un gain de rendement coloristique de 10% environ, évalué à partir des densités optiques. Visuellement, le gain de rendement est voisin de 5%, la différence entre la mesure et l'appréciation visuelle provient de la plus grande vivacité de l'essai. L'essai est également 5% plus fort environ que les pigments de phtalocyanine de cuivre de forme $\beta$ rencontrés habituellement.

Exemple 2

Dans un broyeur à barres de laboratoire, on broie pendant 30 heures 140 parties de phtalocyanine de cuivre directement issue de la synthèse.

On élimine les impuretés contenues dans la phtalocyanine de départ en la traitant par 1000 parties d'eau, 200 parties d'acide chlorhydrique concentré et 5 parties de NORAM DMC, pendant 2 heures à 90°C. Le NORAM DMC est un mélange d'amines de formule

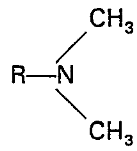

dans laquelle R représente $C_8H_{17}$ (3%), $C_{10}H_{21}$ (6%), $C_{12}H_{25}$ (56%), $C_{14}H_{29}$ (18%), $C_{16}H_{33}$ (10%), $C_{18}H_{37}$ (2%) et

$$CH_3-(CH_2)_7-CH=CH-(CH_2)_8-(5\%).$$

On recueille après séchage 111 parties de pigment auquel on incorpore 5 parties de Pc cu $-[CH_2-N(CH_3)_2]_3$.

Propriétés physiques des pigments

| | % de forme $\beta$ | Surface spécifique |
|---|---|---|
| Essai témoin exemple 1 | 25% | 11 m²/g |
| Essai exemple 2 | 30% | 19,9 m²/g |

Résultats en encre toluénique

L'encre est préparée et appliquée comme à l'exemple 1.

| | Essai témoin exemple 1 | Essai exemple 2 |
|---|---|---|
| Densite optique | | |
| Concentration: 4,5% | 1,67 | 1,85 |
| 5% | 1,77 | 1,91 |
| 5,5% | 1,83 | 1,97 |
| Vivacité | type | supérieure |
| Nuance | type | un peu plus rouge |

Le gain de rendement coloristique est de 20% environ évalué à partir des densités optiques, et de 10% environ évalué visuellement. On observe es mêmes écarts avec d'autres résines, par exemple du type formophénolique.

Exemple 3

Dans un broyeur à barres de laboratoire, on broie pendant 24 heures, 140 parties de phtalocyanine de cuivre directement issue de la synthèse; on introduit alors 5 parties de NORAM DMC et 5 parties de diméthylformamide et on poursuit le broyage pendant 6 heures. On décharge le broyeur sans difficulté, le produit sous forme de poudre ne collant pas aux parois. On termine l'essai comme décrit à l'exemple 1.

Propriétés physiques des pigments

| | % de forme $\beta$ | Surface spécifique |
|---|---|---|
| Essai témoin exemple 1 | 25% | 11 $m^2/g$ |
| Essai exemple 3 | 36% | 40 $m^2/g$ |

Résultats en encres toluéniques

Analogues à ceux obtenus avec l'essai de l'exemple 2.

Examen en encre nitrocellulosique

—Préparation de l'encre

On disperse à l'Attritor le pigment pendant 45 mn à 400 tr/mn avec 1700 parties de billes de 3,8 mm de diamètre pour 30 parties de pigment et 270 parties de vernis comprenant 15% de Chips Nitro 16405 (fabricant NOBEL BOZEL S.A.), 42,5% d'éthanol et 42,5% d'acétate d'éthyle.

Dilution de l'encre à 4,5—5—5,5% en pigment avec un mélange 50/50 d'éthanol et d'acétate d'éthyle et avec du vernis de façon à avoir un temps d'écoulement de 15 s à la coupe AFNOR n° 4.

Comparé à un pigment de phtalocyanine de cuivre classique de forme $\beta$, l'essai conduit à une application de rendement coloristique supérieur de 5 à 10% par évaluation visuelle, de nuance plus rouge, ce qui rend inopérant l'emploi de la densité optique.

Exemple 4

Dans un broyeur à barres de laboratoire, on broie pendant 24 heures 140 parties de phtalocyanine de cuivre directement issue de la synthèse; on introduit alors 5 parties de NORAM DMC et 5 parties d'acide oléique et on poursuit le broyage pendant 6 heures. On décharge le broyeur sans difficulté, le produit, sous forme de poudre, ne collant pas aux parois.

Après élimination des impuretés contenues dans la phtalocyanine de départ, selon les modalités de l'exemple 1, on recueille 115 parties de pigment et on termine l'essai comme dans l'exemple 1.

Propriétés physiques des pigments

| | % de forme $\beta$ | Surface spécifique |
|---|---|---|
| Essai témoin exemple 1 | 25% | 11 $m^2/g$ |
| Essai exemple 4 | 66% | 22 $m^2/g$ |

Résultats en encre toluénique

Analogues à ceux obtenus avec l'essai de l'exemple 2.

Exemple 5

Dans cet exemple, toute la phase de broyage est identique à celle de l'exemple 3.

Le contenu du broyeur est versé dans 1000 parties d'eau à 90°C contenant 1,5 partie d'acide acétique glacial. On introduit une dispersion aqueuse de 10 parties de phtalocyanine de cuivre —$SO_3Na$, puis 200 parties d'acide chlorhydrique concentré; après avoir maintenu à 90°C pendant 2 heures, filtré et séché le produit, on recueille 119 parties de pigment qui est examiné en peinture à solvant.

Les propriétés physiques du pigment sont voisines de celles du pigment de l'exemple 3 avec toutefois une surface spécifique légèrement plus élevée (48 $m^2/g$) dans le cas de l'exemple 5.

Préparation d'une peinture à solvant (alkyde-four)

On disperse au Sussmeyer de laboratoire le pigment avec 900 parties de billes de verre de 3 mm de diamètre pour 80 parties de pigment et 330 parties de résine composée de 60% de Xylène et 40% de Glyalkyde AGS 30 x 75 (fabriqué par Plastimer).

On prélève un échantillon de 5 parties que l'on dilue sous agitation avec 80 parties de Glyalkyde AGS 30 M1 (fabriqué par Plastimer).

On mélange 10 parties de la suspension colorée précédemment obtenue et 20 parties de peinture blanche composée de 67% d'oxyde de titane et 33% de Glyalkyde AGS 30. Application sur papier blanc couché avec un barreau d'épaisseur 150 $\mu$.

Séchage à l'étuve à 125°C pendant 30 mn.

Résultats en peinture alkyde-four

Appliqué contre une phtalocyanine de cuivre $\beta$ du commerce, le pigment obtenu selon l'exemple 5 présente une plus grand vivacité, une nuance légèrement plus verte et un rendement coloristique supérieur de 10%.

Exemple 6

Dans un broyeur à barres de laboratoire, on broie pendant 32 heures, 140 parties de phtalocyanine de cuivre à 3% de chlore, directement issue de la synthèse. On introduit alors 5 parties de NORAM DMC et 5 parties de diméthylformamide et on poursuit le broyage pendant 8 heures. On décharge le broyeur sans difficulté, le produit sous forme de poudre ne collant pas aux parois. On élimine les impuretés contenues dans la phtalocyanine de cuivre de départ en la traitant par 1000 parties d'eau et 200 parties d'acide chlorhydrique concentré, pendant 2 heures à 90°C.

On recueille après séchage 111 parties de pigment.

Un essai témoin comportant un broyage de 40 heures sans amine permet d'obtenir 107 parties de pigment.

Propriétés physiques

| | % de forme $\beta$ | Surface spécifique |
|---|---|---|
| Essai exemple 6 | 8% | 29 $m^2/g$ |
| Essai témoin | 3% | 12 $m^2/g$ |

Application en encre toluénique

Les modalités de préparation et d'application de l'encre sont celles décrites à l'exemple 1.

On observe pour l'essai de l'exemple 6 une plus grande vivacité et un rendement supérieur de 10% comparativement à l'essai témoin.

Exemple 7

Dans un broyeur à barres de laboratoire, on broie pendant 40 heures, 140 parties de phtalocyanine de cuivre à 3% de chlore, directement issue de la synthèse.

On élimine les impuretés contenues dans la phtalocyanine de départ en la traitant par 1000 parties d'eau, 200 parties d'acide chlorhydrique concentré et 5 parties de NORAM DMC, pendant 2 heures à 90°C.

On recueille après séchage 112 parties de pigment.

Propriétés physiques des pigments

| | % de forme $\beta$ | Surface spécifique |
|---|---|---|
| Essai témoin exemple 6 | 3% | 12 $m^2/g$ |
| Essai exemple 7 | 5% | 21 $m^2/g$ |

Application en peinture alkyde-four

Les modalités de préparation et d'application de la peinture sont celles décrites à l'exemple 5.

On note une plus grande vivacité et un rendement supérieur de 5% pour l'essai comparativement au témoin.

Exemple 8

Dans un broyeur à barres de laboratoire, on broie pendant 24 heures, 140 parties de phtalocyanine de cuivre directement issue de la synthèse; on introduit alors 3 parties de NORAM DMC

et 4 parties d'isobutanol et on poursuit le broyage pendant 6 heures. On décharge le broyeur sans difficulté, le produit sous forme de poudre ne collant pas aux parois.

Après élimination des impuretés et incorporation de stabilisant comme dans l'exemple 1, on recueille 108 parties de pigment.

| | % de forme $\beta$ | Surface spécifique |
|---|---|---|
| Essai exemple 8 | 34% | 44 $m^2/g$ |

*Application*

Appliqué en encre nitrocellulosique selon le procédé décrit à l'exemple 3, le pigment ainsi obtenu présente de propiétés coloristiques analogues à celles du pigment de l'exemple 3.

Exemple 9

On opère dans les mêmes conditions que dans l'exemple 8, mais en remplaçant les 3 parties de NORAM DMC et les 4 parties d'isobutanol par 5 parties de DINORAM C et 5 parties de diméthylformamide, Le DINORAM C est un mélange d'amines de formule

$$R_1—NH—CH_2—CH_2—CH_2—NH_2$$

dans laquelle $R_1$ représente $C_8H_{17}$ (3%), $C_{10}H_{21}$ (6%), $C_{12}H_{25}$ (56%), $C_{14}H_{29}$ (18%), $C_{16}H_{33}$ (10%), $C_{18}H_{37}$ (2%) et $CH_3$ —$(CH_2)_7$ —CH=CH—$(CH_2)_8$—(5%).

Propriétés physiques du pigment

| | % de forme $\beta$ | Surface spécifique |
|---|---|---|
| Essai exemple 9 | 28% | 35 $m^2/g$ |

*Application*

Le pigment obtenu présente, en encre toluénique, des propriétés analogues à celles du pigment obtenu à l'exemple 1.

Exemple 10

On opère dans les mêmes conditions que dans l'exemple 8 mais en remplaçant les 3 parties de NORAM DMC et les 4 parties d'isobutanol par 4 parties de NORAM DMC, 3 parties de diméthylformamide et 3 parties d'acide oléïque.

Propriétés physiques du pigment

| | % de forme $\beta$ | Surface spécifique |
|---|---|---|
| Essai exemple 10 | 42% | 31 $m^2/g$ |

*Application*

Le pigment obtenu présente, en encre toluénique, des propriétés analogues à celles du pigment obtenu à l'exemple 1.

Exemple 11

On opère dans les mêmes conditions que dans l'exemple 8 en remplaçant les 3 parties de NORAM DMC et les 4 parties d'isobutanol par 7 parties de NORAM DMC.

Propriétés physiques du pigment

| | % de forme $\beta$ | Surface spécifique |
|---|---|---|
| Essai exemple 11 | 30% | 59 $m^2/g$ |

*Application*

Le pigment obtenu présente, en encre toluénique, des propriétés analogues à celles du pigment obtenu à l'exemple 1.

Exemple 12

Dans cet exemple, on procède comme dans l'exemple 1 mais le produit obtenu après traitement acide en vue d'éliminer les impuretés est gardé sous forme de pâte au lieu d'être séché. Après incorporation de 5 parties de

$$Pc\text{-}cu -[CH_2-N-(CH_3)_2]_3,$$

on obtient une pâte à 65% d'extrait sec que l'on utilise telle quelle pour la coloration d'une encre toluénique selon la même procédure que celle décrite à l'exemple 1. La présence d'une faible quantité d'eau n'est pas gênante pour l'application et on obtient des propriétés coloristiques voisines de celles obtenues à l'exemple 1.

**Revendications**

1. Pigments de phtalocyanine de cuivre caractérisés en ce qu'ils présentent une surface spécifique selon BET comprise entre 15 et 65 $m^2/g$, une teneur enforme $\beta$, déterminée par analyse des rayons X, comprise entre 3 et 85% et qu'ils contiennent jusqu'a 10% d'une amine grasse ou d'un mélange d'amines grasses de formule (I):

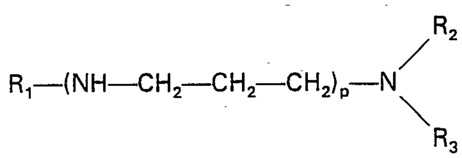
(I)

dans laquelle $R_1$ représente une chaîne hydrocarbonée aliphatique ou alicyclique en $C_1$ à $C_{22}$ non aromatique, $R_2$ représente l'hydrogène ou une chaîne hydrocarbonée aliphatique ou alicyclique en $C_1$ à $C_{22}$ non aromatique, la somme des atomes de carbone des chaînes $R_1$ et $R_2$ est comprise entre 6 et 50, $R_3$ représente l'hydrogène ou un radical aliphatique en $C_1$ à $C_4$ et p varie de 0 à 20.

2. Pigments selon la revendication 1 caractérisés en ce que la phtalocyanine de cuivre est une phtalocyanine de cuivre non halogénée.

3. Pigments selon la revendication 1 charactérisés en ce que la phtalocyanine de cuivre est une phtalocyanine de cuivre halogénée dont la teneur maximum en halogène est 5%.

4. Pigments selon l'une des revendications 1 à 3 caractérisés en ce que dans la formule de l'amine p est compris entre 0 et 4.

5. Pigments selon l'une des revendications 1 à 4 caractérisés en ce qu'ils contiennent 1 à 10% et de préférence 2 à 5% par rapport à la phtalocyanine de cuivre pure d'un ou plusieurs composés non volatils comportant une chaîne hydrocarbonée de 6 à 22 atomes de carbone et une ou plusieurs fonctions polaires, la teneur globale en amine plus composé non volatil ne dépassant pas 12%.

6. Pigments selon la revendication 5 caractérisés en ce que le composé non volatil est l'acide oléïque, l'acide stéarique, l'alcool laurique, l'alcool cétylique, l'oléate ou le stéarate de glycérol.

7. Pigments selon l'une des revendications 1 à 6 caractérisés en ce qu'ils contiennent un dérivé de phtalocyanine de cuivre conférant à la composition une meilleure stabilité aux solvants et une meilleure tenue à la floculation.

8. Procédé pour la préparation des pigments selon l'une des revendications 1 à 7 caractérisé en ce que l'on incorpore avant ou durant le broyage de la phtalocyanine de cuivre, sans substrat minéral, 0,5 à 10% d'une amine grasse ou d'un mélange d'amines grasses de formule (I) puis traite éventuellement en milieu aqueux pour éliminer les impuretés.

9. Procédé selon la revendication 8 caractérisé en ce que l'on ajoute au mélange à broyer phtalocyanine de cuivre et amine, 1 à 10% et de préférence 2 à 5% par rapport à la phtalocyanine de cuivre pure d'un ou plusieurs solvants dont la miscibilité à l'eau doit être au moins 3% à une température comprise entre la température ordinaire et 100°C, la teneur globale en amine et solvant ne devant pas dépasser 15%.

10. Procédé selon la revendication 9 caractérisé en ce que le solvant est le méthanol, l'éthanol, le propanol, l'isopropanol, le butanol, l'isobutanol, la pyridine, le diméthylformamide, le diméthylsulfoxyde.

11. Procédé selon la revendication 8 caractérisé en ce que l'on ajoute au mélange à broyer phtalocyanine de cuivre et amine 1 à 10% et de préférence 2 à 5% par rapport à la phtalocyanine de cuivre pure, d'un ou plusieurs composés non volatils comportant une chaîne hydrocarbonée de 6 à 22 atomes de carbone et une ou plusieurs fonctions polaires, la teneur globale en amine et composé non volatil ne devant pas dépasser 12%.

12. Procédé selon la revendication 8 caractérisé en ce que l'on ajoute au mélange à broyer phtalocyanine de cuivre et amine un ou plusieurs solvants et un ou plusieurs composés non volatils, la teneur globale en amine, solvant et composé non volatil ne devant pas dépasser 15%.

13. Procédé pour la préparation des pigments selon l'une des revendications 1 à 7 caractérisé en ce que l'on introduit 1 à 10% et de préférence 2 à 5% par rapport à la phtalocyanine de cuivre pure d'une amine grasse ou d'un mélange d'amines grasses de formule (I) dans la phtalocyanine de cuivre préalablement broyée, sans substrat minéral, durant la phase de purification de la phtalocyanine de cuivre.

14. Procédé selon la revendication 13 caractérisé en ce qu l'on introduit en plus de l'amine 1 à 10%, et de préférence 2 à 5%, par rapport à la phtalocyanine de cuivre pure d'un ou plusieurs composés non volatils.

**Claims**

1. Copper phthalocyanine pigments characterised in that they have a specific surface area according to BET between 15 and 65 $m^2/g$ and a beta-form content, determined by X-ray analysis, between 3 and 85% and that they contain up to 10% of a fatty amine or mixture of fatty amines of the formula (I):

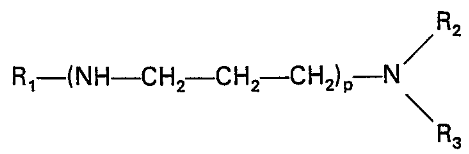

(I)

in which $R_1$ represents a non-aromatic $C_1$ to $C_{22}$ aliphatic or alicyclic hydrocarbon chain, $R_2$ represents hydrogen or a non-aromatic $C_1$ to $C_{22}$ aliphatic or alicyclic hydrocarbon chain, the sum of the carbon atoms in $R_1$ and $R_2$ being between 6 and 50, $R_3$ represents hydrogen or an $C_1$ to $C_4$ aliphatic radical and p varies from 0 to 20.

2. Pigments according to Claim 1 wherein the copper phthalocyanine is not halogenated.

3. Pigments according to Claim 1 wherein the copper phthalocyanine is halogenated with a maximum halogen content of 5%.

4. Pigments according to any one of Claims 1 to 3 wherein, in formula of the fatty amine, p is between 0 and 4.

5. Pigments according to any one of Claims 1 to 4 which contain from 1 to 10%, and preferably 2 to 5%, with respect to the pure copper phthalocyanine, of one or more non-volatile compounds comprising a $C_1$ to $C_{22}$ hydrocarbon chain and one or more polar functions and in which the overall content of amine and non-volatile compound does not exceed 12%.

6. Pigments according to Claim 5 wherein the non-volatile compound is oleic acid, stearic acid, lauryl alcohol, cetyl alcohol, glycerol stearate or glycerol oleate.

7. Pigments according to any one of Claims 1 to 6 containing a copper phthalocyanine derivative which confers greater stability to solvents and greater resistance to flocculation.

8. A process for the preparation of pigments according to any one of Claims 1 to 7 characterised in that from 5 to 10% of a fatty amine or a mixture of fatty amines of Formula (I) is incorporated into the phthalocyanine before or during the milling without mineral substrate preferably followed by treatment with water to eliminate impurities.

9. A process according to Claim 8 wherein from 1 to 10%, and preferably from 2 to 5%, with respect to the pure copper phthalocyanine, of one or more solvents, having a water-miscibility of at least 3% at a temperature between ambient and 100°C, is added to the mixture of copper phthalocyanine and amine to be ground, the overall content of amine and solvent being not greater than 15%.

10. A process according to Claim 9 wherein the solvent is methanol, ethanol, propanol, isopropanol, butanol, isobutanol, pyridine, dimethylformamide or dimethylsulphoxide.

11. A process according to Claim 8 wherein from 1 to 10%, and preferably 2 to 5%, with respect to the pure copper phthalocyanine of one or more non-volatile compounds comprising a $C_1$ to $C_{22}$ hydrocarbon chain and one or more polar functions is added to the mixture of copper phthalocyanine and amine to be ground, the overall content of amine and non-volatile compound not exceeding 12%.

12, A process according to Claim 8 wherein one or more solvents and one or more non-volatile compounds are added to the mixture or copper phthalocyanine and amine to be ground, the overall quantity of amine, solvent and non-volatile compound not exceeding 15%.

13. Process for the preparation of pigments according to any one of Claims 1 to 7 wherein from 1 to 10%, and preferably from 2 to 5%, of a fatty amine or a mixture of fatty amines of Formula (I) is introduced into the copper phthalocyanine, previously ground without mineral substrate, during the purification step of the copper phthalocyanine.

14. A process according to Claim 13 wherein, in addition to the amine, from 1 to 10%, and

preferably from 2 to 5% with respect to the copper phthalocyanine, of one or more non-volatile compounds is added.

**Patentansprüche**

1. Kupferphthalocyaninpigmente, dadurch gekennzeichnet, daß sie eine spezifische Oberfläche gemäß BET zwischen 15 und 65 $m^2/g$ besitzen, einen durch Röntgenstrahlenanalyse bestimmten Gehalt an $\beta$-Form zwischen 3 und 85% aufweisen und bis zu 10% eines Fettamins oder eines Gemischs von Fettaminen der Formel (I):

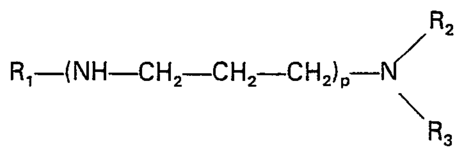

(I)

enthalten, worin $R_1$ für eine nichtaromatische aliphatische oder alicyclische $C_1$—$C_{22}$-Kohlenwasserstoffkette steht, $R_2$ für Wasserstoff oder eine nichtaromatische aliphatische oder alicyclische $C_1$—$C_{22}$-Kohlenwasserstoffkette steht, wobei die Summe der Kohlenstoffatome der Ketten $R_1$ und $R_2$ zwischen 6 und 50 beträgt, $R_3$ für Wasserstoff oder ein aliphatisches $C_1$—$C_4$-Radikal steht und p zwischen 0 und 20 variiert.

2. Pigmente nach Anspruch 1, dadurch gekennzeichnet, daß das Kupferphthalocyanin ein nichthalogeniertes Kupferphthalocyanin ist.

3. Pigmente nach Anspruch 1, dadurch gekennzeichnet, daß das Kupferphthalocyanin ein halogeniertes Kupferphthalocyanin ist, dessen maximaler Halogengehalt 5% beträgt.

4. Pigmente nach einem der Ansprüche 1 bis 3, dadurch gekennzeichnet, daß in der Aminformel p zwischen 0 und 4 liegt.

5. Pigmente nach einem der Ansprüche 1 bis 4, dadurch gekennzeichnet, daß sie 1 bis 10% und vorzugsweise 2 bis 5%, bezogen auf reines Kupferphthalocyanin, einer oder mehrerer nichtflüchtiger Verbindungen enthalten, welche eine Kohlenwasserstoffkette mit 6 bis 22 Kohlenstoffatomen und eine oder mehrere polare Funktionen aufweisen, wobei der Gesamtgehalt an Amin plus nichtflüchtiger Verbindung 12% nicht überschreitet.

6. Pigmente nach Anspruch 5, dadurch gekennzeichnet, daß die nichtflüchtige Verbindung aus Ölsäure, Stearinsäure, Laurylalkohol, Cetylalkohol oder Glycerinoleat oder -stearat besteht.

7. Pigmente nach einem der Ansprüche 1 bis 6, dadurch gekennzeichnet, daß sie ein Kupferphthalocyaninderivat enthalten, welches der Zusammensetzung eine verbesserte Stabilität gegenüber Lösungsmitteln und ein verbessertes Ausflockungsverhalten erteilt.

8. Verfahren zur Herstellung der Pigmente nach einem der Ansprüche 1 bis 7, dadurch gekennzeichnet, daß man vor oder während des Mahlens des Kupferphthalocyanins ohne Mineralsubstrat 0,5 bis 10% eines Fettamins oder eines Gemischs von Fettaminen der Formel (I) einverleibt und gegebenenfalls eine Behandlung mit einem wäßrigen Medium zur Entfernung der Verunreinigungen anschließt.

9. Verfahren nach Anspruch 8, dadurch gekennzeichnet, daß man dem zu mahlenden Gemisch aus Kupferphthalocyanin und Amin 1 bis 10% und vorzugsweise 2 bis 5%, bezogen auf reines Kupferphthalocyanin, eines oder mehrerer Lösungsmittel, deren Mischbarkeit mit Wasser bei einer Temperatur zwischen Raumtemperatur und 100°C höchstens 3% beträgt, hinzufügt, wobei der Gesamtgehalt an Amin und Lösungsmittel 15% nicht überschreitet.

10. Verfahren nach Anspruch 9, dadurch gekennzeichnet, daß das Lösungsmittel aus Methanol, Äthanol, Propanol, Isopropanol, Butanol, Isobutanol, Pyridin, Dimethylformamid oder Dimethylsulfoxid besteht.

11. Verfahren nach Anspruch 8, dadurch gekennzeichnet, daß man dem zu mahlenden Gemisch aus Kupferphthalocyanin und Amin 1 bis 10% und vorzugsweise 2 bis 5%, bezogen auf reines Kupferphthalocyanin, einer oder mehrerer nichtflüchtiger Verbindungen hinzufügt, die eine Kohlenwasserstoffkette mit 6 bis 22 Kohlenstoffatomen und eine oder mehrere polare Funktionen enthalten, wobei der Gesamtgehalt an Amin und nichtflüchtiger Verbindung 12% nicht überschreitet.

12. Verfahren nach Anspruch 8, dadurch gekennzeichnet, daß man dem zu mahlenden Gemisch aus Kupferphthalocyanin und Amin ein oder mehrere Lösungsmittel und eine oder mehrere nichtflüchtige Verbindungen hinzuführt, wobei der Gesamtgehalt an Amin, Lösungsmittel und nichtflüchtiger Verbindung 15% nicht überschreitet.

13. Verfahren zur Herstellung von Pigmenten nach einem der Ansprüche 1 bis 7, dadurch gekennzeichnet, daß man 1 bis 10% und vorzugsweise 2 bis 5%, bezogen auf reines Kupferphthalocyanin, eines Fettamins oder eines Gemischs von Fettaminen der Formel (I) dem vorher ohne Mineralsubstrat gemahlenen Kupferphthalocyanin während der Reinigungsphase des Kupferphthalocyanins hinzufügt.

14. Verfahren nach Anspruch 13, dadurch gekennzeichnet, daß man neben dem Amin 1 bis 10% und vorzugsweise 2 bis 5%, bezogen auf reines Kupferphthalocyanin, einer oder mehrerer nichtflüchtiger Verbindungen hinzufügt.